# EUROPÄISCHE PATENTSCHRIFT

(11) **EP 2 068 225 B1**
(45) Veröffentlichungstag und Bekanntmachung des Hinweises auf die Patenterteilung: **16.03.2016**
(21) Anmeldenummer: 07023595.7
(22) Anmeldetag: 05.12.2007
(51) Int. Cl.: G05G 9/047, B64C 13/04

(54) **Steuervorrichtung**
Control device
Dispositif de commande

(43) Veröffentlichungstag der Anmeldung: 10.06.2009
(73) Patentinhaber: Liebherr-Aerospace Lindenberg GmbH, 88161 Lindenberg/Allgäu (DE)
(72) Erfinder: König, Bernhard, 86399 Bobingen (DE)
(74) Vertreter: Herrmann, Uwe

(56) Entgegenhaltungen:
- EP-A- 1 450 231
- EP-A- 1 770 010
- US-A- 4 422 345

## Beschreibung

Die vorliegende Erfindung betrifft eine Steuervorrichtung, insbesondere eine Steuervorrichtung für ein Luftfahrzeug, mit einem mehrachsig kippbaren Steuerknüppel zur Betätigung von Steuersignalgebern, insbesondere zur Nick- und Rollsteuerung eines Luftfahrzeuges, sowie mit einem kardanartigen Gelenk, mittels dessen der Steuerknüppel um unterschiedliche Schwenkachsen kippbar ist.

Aus dem Stand der Technik sind Steuerknüppel zur Steuerung von Flugzeugen bekannt, die um zwei Achsen kippbar sind, bei denen es sich um eine Querachse, um die der Steuerknüppel nach vorne und hinten kippbar ist, sowie um eine Längsachse handelt, um die der Steuerknüppel nach rechts und links kippbar ist. Die entsprechenden Kippbewegungen des Steuerknüppels werden von Signalgebern erfaßt und sodann in Steuerbewegungen des Flugzeuges umgesetzt. Aus dem Stand der Technik ist es dabei bekannt, ein Kardangelenk zu verwenden, mittels dessen der Steuerknüppel um zwei Achsen schwenkbar ist, wobei bei dieser vorbekannten Lösung ein Nachteil darin besteht, dass eine der beiden Achsen nicht ortsfest gelagert werden kann, da sie den Schwenkbewegungen des Steuerknüppels um die andere Achse folgen muss.

Die EP 1 770 010 A2 betrifft eine Steuervorrichtung mit einem Steuerknüppel für ein Luftfahrzeug. Dabei ist ein mehrachsig kippbarer Steuerknüppel zur Betätigung zumindest zweier Steuersignalgeber zur Nick- und Rollsteuerung des Luftfahrzeugs vorgesehen, wobei die Steuersignalgeber zwei Steuerwellen zugeordnet sind, die mit dem Steuerknüppel über ein kadernartiges Gelenk mit zwei zueinander quer ausgerichteten Schwenkachsen verbunden sind. Ferner sind die beiden Steuerwellen ortsfest an einem gemeinsamen Gestell drehbar gelagert und das Gelenk weist gegenüber den Steuerwellen jeweils einen Freilauf für Kippbewegungen des Steuerknüppels in der Ebene parallel zu der jeweiligen Steuerwelle auf.

Die EP 1 450 231 A2 betrifft eine Eingabevorrichtung mit einem Joystickbetätigungsbereich, mehreren Positionssensoren zum Detektieren eines Betätigungszustands des Betätigungsbereichs sowie Aktuatoren zum Aufbringen einer externen Kraft auf den Betätigungsbereich. Ferner sieht die Vorrichtung einen Steuerbereich zum Steuern des Antriebs des Aktuators auf der Basis eines von dem Positionssensor ausgegebenen Positionssignals vor.

Die US 4,422,354 offenbart einen weiteren zweiachsigen Steuerhebel für eine Fahrerkabine.

Ausgehend davon liegt der vorliegenden Erfindung die Aufgabe zugrunde, eine verbesserte Steuervorrichtung zu schaffen, die vergleichsweise einfach und kompakt ausgebildet werden kann.

Erfindungsgemäß wird diese Aufgabe durch die Merkmale des Anspruchs 1 gelöst. Danach ist vorgesehen, dass das Gelenk wenigstens einen Freilauf für eine Kippbewegung des Steuerknüppels um eine der Schwenkachsen aufweist, wobei der Freilauf durch einen Gelenk-Mechanismus oder durch ein Bauelement gebildet wird, das in Richtung des Freilaufs elastische Eigenschaften aufweist. Der Gelenk-Mechanismus bzw. das elastische Bauteil verbindet den Steuerknüppel mittelbar oder unmittelbar mit dem Gelenk.

Erfindungsgemäß ist somit vorgesehen, einen Freiheitsgrad durch den Freilauf derart zu bilden, dass der Steuerknüppel Kippbewegungen um eine Achse unabhängig von der anderen Achse durchführen kann, dass also beispielsweise der Steuerknüppel hinsichtlich Nickbewegungen von Rollbewegungen und/oder hinsichtlich Rollbewegungen von Nickbewegungen abgekoppelt ist. Erfindungsgemäß weist der Freilauf ein Gelenk oder ein elastisches Bauelement auf, das den Steuerknüppel mittelbar oder unmittelbar mit dem kardanartigen Gelenk verbindet. Bei der vorliegenden Lösung sind somit die Bewegungen rotatorisch. Durch den Einsatz des erfindungsgemäßen Freilaufs besteht darüber hinaus die Möglichkeit, einen Antrieb bzw. Steuermotor derart in die Kinematik zu integrieren, dass dieser keinen zusätzlichen Bauraum benötigt. Wird ein elastisches Bauelement eingesetzt, ist vorzugsweise vorgesehen, dass sich dieses in Richtung des Freilaufs elastisch verhält, in einer dazu senkrechten Richtung jedoch Kräfte übertragen kann.

Der Freilauf kann derart angeordnet sein, dass die durch den Freilauf ermöglichte Kippbewegung des Steuerknüppels in einer Ebene verläuft, in der eine der Schwenkachsen liegt oder die parallel zu einer der Schwenkachsen verläuft. Denkbar ist es, den Freilauf derart anzuordnen, dass dieser eine Kippbewegung des Steuerknüppels in einer Ebene ermöglicht, in der die Längsachse der Steuervorrichtung liegt.

Das Gesenk weist ein erstes und ein zweites Gelenkteil auf, die derart angeordnet sind, dass sie unabhängig voneinander um unterschiedliche Schwenkachsen verschwenkbar sind. Vorzugsweise ist vorgesehen, dass die Schwenkachsen des Gelenkes aufeinander senkrecht stehen.

Der Freilauf weist einen Hebelmechanismus auf, der einen ersten Hebel umfasst, der mit dem Steuerknüppel in Verbindung steht und einen zweiten Hebel, der mit dem ersten Hebel sowie mit einem der Gelenkteile schwenkbar in Verbindung steht. Die Verbindung kann jeweils mittelbar oder unmittelbar erfolgen. Der Gelenk-Hebelmechanismus kann somit aus zwei oder mehr als zwei miteinander gelenkig verbundenen Hebeln bestehen. Als elastisches Element kommt beispielsweise eine Feder in Betracht, jedoch ist die Erfindung darauf nicht beschränkt.
Dabei ist der erste Hebel an dem Steuerknüppel oder an einem mit diesem in Verbindung stehenden Lager schwenkbar angeordnet.
Das Lager kann durch einen den Steuerknüppel umfassenden Ring gebildet sein, an dem der erste Hebel angelenkt ist.

In eine weiteren erfindungsgemäße Ausgestaltung der Erfindung ist vorgesehen, dass das kardanartige Gelenk zwei Schwenkachsen aufweist und einen Freilauf für eine Kippbewegung des Steuerknüppels um eine der Schwenkachsen sowie einen Freilauf für eine Kippbewegung des Steuerknüppels um die andere Schwenkachse aufweist. Dabei ist ein Freilauf durch eine längliche Ausnehmung gebildet, durch die eine der Schwenkachsen verläuft.
In besonders bevorzugter Ausgestaltung der Erfindung ist vorgesehen, dass eine oder beide der Schwenkachsen des Gelenkes ortsfest angeordnet sind. In dieser Ausgestaltung der Erfindung wird somit eine Steuervorrichtung bereitgestellt, die zwei unabhängige Achsen aufweist, die fest stehen. Beispielsweise ist denkbar, dass die Schwenkachsen des Gelenkes an einem Gestell oder einem Gehäuse der Steuervorrichtung angeordnet sind.

Aus dem Stand der Technik ist es bekannt, aktive Steuerknüppelsteuerungen von Flugzeugen vorzusehen, die Stellmotoren aufweisen, mittels derer Stellbewegungen des Steuerknüppels simuliert werden bzw. mittels derer bei Flugzeugen mit zwei Steuerknüppeln die Steuerbewegungen eines Steuerknüppels an dem anderen Steuerknüppel nachgeführt werden. In weiterer Ausgestaltung der Erfindung ist somit vorgesehen, dass die Steuervorrichtung einen oder mehrere Steuermotoren aufweist, die mit Schwenkachsen des Gelenkes derart gekoppelt sind, dass die Betätigung des oder der Steuermotoren zu einer Schwenkbewegung des Steuerknüppels führt.

In weiterer Ausgestaltung der Erfindung ist vorgesehen, dass das erste und/oder das zweite Gelenkteil in Umfangsrichtung geschlossen, d. h. beispielsweise als ringförmige Struktur, oder bügelförmig, beispielsweise U-förmig ausgeführt sind. Vorzugsweise ist vorgesehen, dass die Gelenkteile an gegenüberliegenden Seiten schwenkbar gelagert sind.

Vorzugsweise ist ferner vorgesehen, dass die Steuervorrichtung derart ausgeführt ist, dass zusätzliche Komponenten wie Sensoren, Zentriervorrichtungen und dergleichen ortsfest angeordnet sind.

Weitere Einzelheiten und Vorteile der Erfindung werden anhand eines in der Zeichnung dargestellten Ausführungsbeispiels näher erläutert:

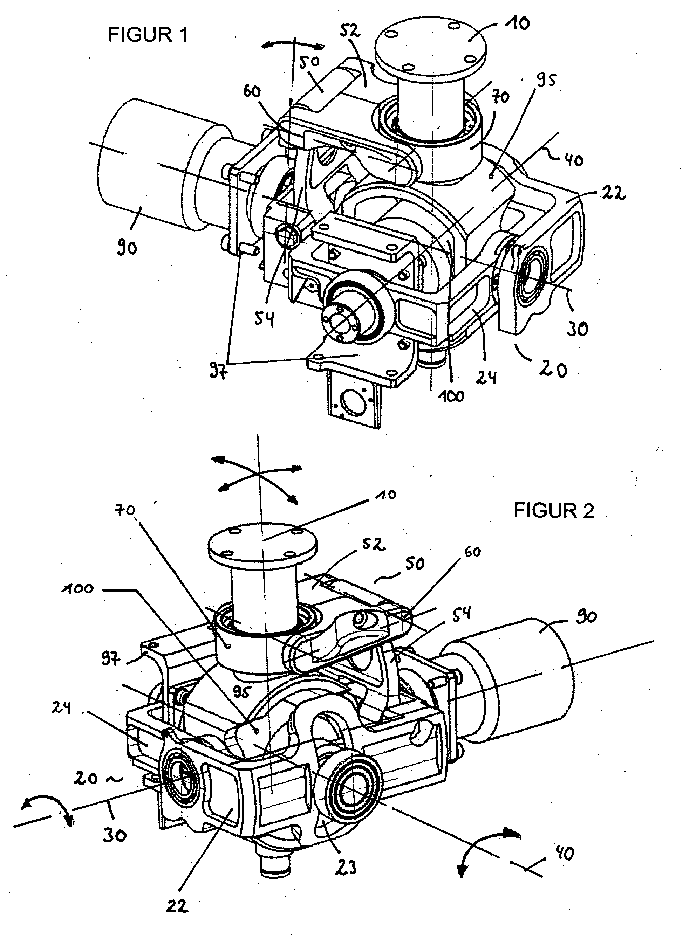

Die Figuren 1 und 2 zeigen die Steuervorrichtung gemäß der Erfindung in unterschiedlichen perspektivischen Darstellungen.

Die Steuervorrichtung umfasst einen Steuerknüppel bzw. eine Steuerbetätigung 10, die um zwei Schwenkachsen 30, 40 kippbar ist, wobei die Schwenkachsen 30, 40 aufeinander senkrecht stehen.

Das Gelenk 20 besteht aus einem ersten Gelenkteil 22, das um die Schwenkachse 30 verschwenkbar ist, und aus einem zweiten Gelenkteil 24, das um die dazu senkrechte Schwenkachse 40 verschwenkbar ist.

Die Schwenkachsen 30, 40 sind ortsfest ausgeführt und beispielsweise an einem Gehäuse angeordnet, das die in den Figuren dargestellte Steuervorrichtung umgibt.

Wie dies weiter aus den Figuren 1 und 2 hervorgeht, ist der Steuerknüppel bzw. die Steuerbetätigung 10 über einen Gelenk-Hebelmechanismus 50 mit dem ersten Gelenkteil 22 derart verbunden, dass der Steuerknüppel 10 um die Achse 40 relativ zu dem ersten Gelenkteil 22 und somit auch relativ zu der Achse 30 verschwenkbar ist.

Der Gelenk-Hebelmechanismus 50 besteht aus einem ersten Hebel 52, der schwenkbar an dem Ausgleichslager 70 für die Relativbewegung angelenkt ist und der in seinem anderen Endbereich schwenkbar mit dem zweiten Hebel 54 in Verbindung steht, der seinerseits schwenkbar mit dem ersten Gelenkteil 22 in Verbindung steht. Diese Anordnung erlaubt es, dass der Steuerknüppel bzw. die Steuerbetätigung 10 um die Achse 40 schwenkbar ist, ohne dass das erste Gelenkteil 22 dieser Schwenkbewegung folgen muss. Die Relativbewegung zwischen Steuerknüppel/Steuerbetätigung 10 und dem ersten Gelenkteil 22 wird durch den Gelenk-Hebelmechanismus 50 ermöglicht. Das Bezugszeichen 60 kennzeichnet das Gelenk, das den ersten Hebel 52 mit dem zweiten Hebel 54 verbindet.

Ein Freilauf des Steuerknüppels 10 bezüglich der Schwenkbewegung um die Schwenkachse 30 wird dadurch ermöglicht, dass das erste Gelenkteil 22 eine längliche Ausnehmung 23 aufweist, die es erlaubt, das erste Gelenkteil 22 relativ zu der Schwenkachse 40 zu verschwenken.

Mit den Bezugszeichen 90, 100 sind Steuermotoren gekennzeichnet, die eine Bewegung des Steuerknüppels 10 um die Achse 30 bzw. um die Achse 40 ermöglichen.
Dabei erlaubt es die erfindungsgemäße Ausgestaltung des Gelenk-Hebelmechanismus 50, dass einer der Antriebe, nämlich der Steuermotor 100 derart integriert ist, dass dieser keinen zusätzlichen Bauraum benötigt, wie dies aus den Figuren hervorgeht. Der Antrieb 100 befindet sich in dem durch die Gelenkteile 22, 24 begrenzten Bereich. Wie dies aus Figur 1 hervorgeht, ist das Gelenkteil 24 in Umfangsrichtung geschlossen, wohingegen das Gelenkteil 22 als U-förmiger Bügel ausgeführt ist. Grundsätzlich ist auch eine davon abweichende Ausgestaltung der Gelenkteile möglich. Beispielsweise kann das Gelenkteil 22 auch L-förmig ausgeführt sein.
Das Bezugszeichen 95 kennzeichnet schließlich die Steuerbetätigungsaufnahme und die Bezugszeichen 97 die Halterungen für die Antriebe bzw. Steuermotoren 90, 100.
In der in den Figuren dargestellten Ausführungsform sind die Achsen 30, 40 ortsfest angeordnet und können beispielsweise mit einem Gehäuse der Steuervorrichtung in Verbindung stehen. Der erfindungsgemäße Freilauf bzw. Hebelmechanismus ermöglicht es, dass bei der vorliegenden Lösung alle Bewegungen rotatorisch sind. Eine Linearbewegung zur Mitnahme einer zweiten Achse ist bei dieser Ausgestaltung des Freilaufs nicht erforderlich.
Sind die Achsen ortsfest montiert, besteht der Vorteil, dass auch zusätzliche Komponenten, wie Sensoren, Zentriervorrichtungen und dergleichen ortsfest angeordnet sein können. Der Anbau der Sensorik und der Aktorik wird erleichtert und auch ein einfaches Umrüsten der Sensorik- und Aktorik-Komponenten für verschiedene Steuerungsausführungen ist ohne weiteres möglich.

Sind die Achsen ortsfest angeordnet, werden dementsprechend keine bewegten Anschlußleitungen, Schleifkontakte und dergleichen benötigt.

## Patentansprüche

1. Steuervorrichtung insbesondere für ein Luftfahrzeug mit einem mehrachsig kippbaren Steuerknüppel (10) zur Betätigung von Steuersignalgebern, insbesondere zur Nick- und Rollsteuerung eines Luftfahrzeuges, sowie mit einem kardanartigen Gelenk (20), mittels dessen der Steuerknüppel (10) um unterschiedliche Schwenkachsen (30, 40) kippbar ist, wobei das kardanartige Gelenk (20) einen ersten Freilauf für eine Kippbewegung des Steuerknüppels (10) um eine Erste der Schwenkachsen (30, 40) aufweist, wobei der erste Freilauf wenigstens ein Gelenk aufweist oder wenigstens abschnittsweise elastisch ausgeführt ist, wobei das kardanartige Gelenk (20) ein erstes Gelenkteil (22) und ein zweites Gelenkteil (24) aufweist, wobei das kardanartige Gelenk (20) eine zweite Schwenkachse (30) sowie einen zweiten Freilauf für eine Kippbewegung des Steuerknüppels (10) um die zweite Schwenkachse aufweist, wobei der zweite Freilauf durch eine längliche Ausnehmung (23) im ersten Gelenkteil (22) gebildet ist, **dadurch gekennzeichnet, dass** der erste Freilauf einen Hebelmechanismus (50) mit einem ersten Hebel (52) und mit einem zweiten Hebel (54) umfasst, wobei der erste Hebel (52) an dem Steuerknüppel (10) oder an einem mit diesem in Verbindung stehenden Lager (70) angelenkt ist und schwenkbar in Verbindung steht und wobei der zweite Hebel (54) mit dem ersten Hebel (52) sowie mit dem ersten Gelenkteil (22) des kardanartigen Gelenks (20) schwenkbar in Verbindung steht, so dass der Steuerknüppel (10) um die erste Schwenkachse (40) verschwenkbar ist.

2. Steuervorrichtung nach Anspruch 1, **dadurch gekennzeichnet, dass** jeder Freilauf derart angeordnet ist, dass die durch den Freilauf ermöglichte Kippbewegung des Steuerknüppels (10) in einer Ebene erfolgt, in der eine der Schwenkachsen (30, 40) liegt oder die parallel zu einer der Schwenkachsen verläuft.

3. Steuervorrichtung nach Anspruch 1 oder 2, **dadurch gekennzeichnet, dass** das erste Gelenkteil (22) und das zweite Gelenkteil (24) derart angeordnet sind, dass sie unabhängig voneinander um unterschiedliche Schwenkachsen (30, 40) verschwenkbar sind.

4. Steuervorrichtung nach Anspruch 1, **dadurch gekennzeichnet, dass** das Lager (70) durch einen den Steuerknüppel (10) umfassenden Ring gebildet wird, an dem der erste Hebel (52) angelenkt ist.

5. Steuervorrichtung nach einem der vorhergehenden Ansprüche, **dadurch gekennzeichnet, dass** durch die längliche Ausnehmung (23) die erste Schwenkachse (40) verläuft.

6. Steuervorrichtung nach einem der vorhergehenden Ansprüche, **dadurch gekennzeichnet, dass** eine oder beide der Schwenkachsen (30, 40) des kardanartigen Gelenkes (20) ortfest angeordnet sind.

7. Steuervorrichtung nach Anspruch 6, **dadurch gekennzeichnet, dass** die Schwenkachsen (30, 40) des kardanartigen Gelenkes (20) an einem Gestell oder Gehäuse angeordnet sind.

8. Steuervorrichtung nach einem der vorhergehenden Ansprüche, **dadurch gekennzeichnet, dass** wenigstens ein, insbesondere zwei Steuermotoren (90, 100) vorgesehen sind, die mit jeweils einer der beiden der Schwenkachsen (30, 40) des kardanartigen Gelenkes (20) derart gekoppelt sind, dass die Betätigung des wenigstens einen der Steuermotoren (90, 100) zu einer Schwenkbewegung des Steuerknüppels (10) führt.

9. Steuervorrichtung nach einem der vorhergehenden Ansprüche, **dadurch gekennzeichnet, dass** das erste und/oder das zweite Gelenkteil (22, 24) geschlossen oder bügelförmig, beispielsweise U-förmig oder L-förmig ausgeführt sind.

10. Steuervorrichtung nach einem der vorhergehenden Ansprüche , **dadurch gekennzeichnet, dass** die Gelenkteile (22, 24) an gegenüberliegenden Seiten schwenkbar gelagert sind.

11. Steuervorrichtung nach einem der vorhergehenden Ansprüche, **dadurch gekennzeichnet, dass** zusätzliche Komponenten der Steuervorrichtung, insbesondere Sensoren, Zentriervorrichtungen, ortsfest angeordnet sind.

## Claims

1. A control device, in particular for an aircraft, having a multiaxially tiltable joystick (10) for the actuation of control signal transducers, in particular for the pitch control and roll control of an aircraft, as well as having a cardan-like joint (20) by means of which the joystick (10) is tiltable about different pivot axes (30, 40), wherein the cardan-like joint (20) has a first freewheel for a tilt movement of the joystick (10) about a first one of the pivot axes (30, 40), with the first freewheel having at least one joint or being made elastically at least section-wise, wherein the cardan-like joint (20) has a first joint part (22) and a second joint part (24), wherein the cardan-like joint (20) has a second pivot axis (30) and a second freewheel for a tilt movement of the joystick (10) about the second pivot axis, with the second freewheel being formed by an elongate recess (23) in the first joint part (22), **characterized in that** the first freewheel includes a lever mechanism (50) having a first lever (52) and having a second lever (54), said first lever (52) being hinged and pivotably connected to the joystick (10) or to a bearing (70) connected thereto, and said second lever (54) being pivotably connected to the first lever (52) and to the first joint part (22) of the cardan-like joint (20) so that the joystick (10) is tiltable about the first pivot axis (40).

2. A control device in accordance with claim 1, **characterized in that** each freewheel is arranged such that the tilt movement of the joystick (10) enabled by the freewheel takes place in a plane in which one of the pivot axes (30, 40) is disposed or which extends parallel to one of the pivot axes.

3. A control device in accordance with either of claims 1 or 2, **characterized in that** the first joint part (22) and the second joint part (24) are arranged such that they are pivotable about different pivot axes (30, 40) independently of one another.

4. A control device in accordance with claim 1, **characterized in that** the bearing (70) is formed by a ring which encompasses the joystick (10) and is hinged to the first lever (52).

5. A control device in accordance with one of the preceding claims, **characterized in that** the first pivot axis (40) extends through the elongate recess (23).

6. A control device in accordance with one of the preceding claims, **characterized in that** one or both of the pivot axes (30, 40) of the cardan-like joint (20) are arranged in a stationary manner.

7. A control device in accordance with claim 6, **characterized in that** the pivot axles (30, 40) of the cardan-like joint (20) are arranged at a rack or housing.

8. A control device in accordance with one of the preceding claims, **characterized in that** at least one, in particular two, control motors (90, 100) are provided which are each coupled to one of the two pivot axles (30, 40) of the cardan-like joint (20) such that the actuation of the least one of the control motors (90, 100) results in a pivot movement of the joystick (10).

9. A control device in accordance with one of the preceding claims, **characterized in that** the first and/or second joint parts (22, 24) are closed or are made in hoop shape, for example in U shape or in L shape.

10. A control device in accordance with one of the preceding claims, **characterized in that** the joint parts (22, 24) are pivotably supported at oppositely disposed sides.

11. A control device in accordance with one of the preceding claims, **characterized in that** additional components of the control device, in particular sensors, centering devices, are arranged in a stationary manner.

## Revendications

1. Dispositif de commande, en particulier pour un véhicule aérien, comprenant un levier de commande (10) pouvant basculer sur plusieurs axes destiné à actionner des générateurs de signaux de commande, en particulier pour la commande de tangage et de roulis d'un véhicule aérien, ainsi qu'un joint de type Cardan (20), au moyen duquel le levier de commande (10) peut être basculé sur différents axes de pivotement (30, 40), le joint de type Cardan (20) comportant une première roue libre pour un mouvement basculant du levier de commande (10) sur un premier des axes de pivotement (30, 40), la première roue libre comportant au moins un joint ou étant réalisée au moins sur certaines parties de manière élastique,
le joint de type Cardan (20) comportant une première pièce de joint (22) et une seconde pièce de joint (24), le joint de type Cardan (20) comportant un second axe de pivotement (30) ainsi qu'une seconde roue libre pour un mouvement basculant du levier de commande (10) sur le second axe de pivotement, la seconde roue libre étant formée par un évidement allongé (23) dans la première pièce de joint (22), **caractérisé en ce que** la première roue libre comprend un mécanisme de levier (50) doté d'un premier levier (52) et d'un second levier (54), le premier levier (52) étant articulé et se trouvant en liaison pivotante sur le levier de commande (10) ou sur un palier (70) en liaison avec celui-ci, et le second levier (54) se trouvant en liaison pivotante avec le premier levier (52) ainsi qu'avec la première pièce de joint (22) du joint de type Cardan (20), de sorte que le levier de commande (10) peut être pivoté sur le premier axe de pivotement (40).

2. Dispositif de commande selon la revendication 1, **caractérisé en ce que** chaque roue libre est disposée de telle manière que le mouvement basculant du levier de commande (10) que permet la roue libre se fait dans un plan dans lequel se trouve l'un des axes de pivotement (30, 40) ou qui s'étend parallèlement à l'un des axes de pivotement.

3. Dispositif de commande selon la revendication 1 ou 2, **caractérisé en ce que** la première pièce de joint (22) et la seconde pièce de joint (24) sont disposées de telle manière qu'elles peuvent être pivotées indépendamment l'une de l'autre sur différents axes de pivotement (30, 40).

4. Dispositif de commande selon la revendication 1, **caractérisé en ce que** le palier (70) est formé par un anneau entourant le levier de commande (10), sur lequel est articulé le premier levier (52).

5. Dispositif de commande selon l'une des revendications précédentes, **caractérisé en ce que** le premier axe de pivotement (40) s'étend à travers l'évidement allongé (23).

6. Dispositif de commande selon l'une des revendications précédentes, **caractérisé en ce que** l'un des axes de pivotement (30, 40), ou les deux, du joint de type Cardan (20) est/sont disposé(s) fixe(s).

7. Dispositif de commande selon la revendication 6, **caractérisé en ce que** les axes de pivotement (30, 40) du joint de type Cardan (20) sont disposés sur un support ou un boîtier.

8. Dispositif de commande selon l'une des revendications précédentes, **caractérisé en ce qu'**au moins un, en particulier deux moteurs de commande (90, 100) sont prévus, qui sont couplés à respectivement l'un des deux axes de pivotement (30, 40) du joint de type Cardan (20) de telle manière que l'actionnement de l'au moins un des moteurs de commande (90, 100) entraîne un mouvement de pivotement du levier de commande (10).

9. Dispositif de commande selon l'une des revendications précédentes, **caractérisé en ce que** la première et/ou la seconde pièce de joint (22, 24) est/sont réalisée(s) fermée(s) ou en forme d'étrier, par exemple en forme de U ou en forme de L.

10. Dispositif de commande selon l'une des revendications précédentes, **caractérisé en ce que** les pièces de joint (22, 24) sont montées pivotantes sur des côtés opposés.

11. Dispositif de commande selon l'une des revendications précédentes, **caractérisé en ce que** des composants supplémentaires du dispositif de commande, en particulier des capteurs, des dispositifs de centrage, sont disposés fixes.
